**Europäisches Patentamt**

(19) **European Patent Office**

**Office européen des brevets**

(11) Veröffentlichungsnummer: **0 009 713**
**B1**

(12) # EUROPÄISCHE PATENTSCHRIFT

(45) Veröffentlichungstag der Patentschrift:
**06.01.82**

(51) Int. Cl.³: **B 27 C 9/04**, B 23 Q 37/00,
F 16 H 9/04, F 16 H 11/00

(21) Anmeldenummer: **79103495.2**

(22) Anmeldetag: **18.09.79**

(54) **Kombinierte Heimwerkermaschine.**

(30) Priorität: **20.09.78 DE 2840810**

(73) Patentinhaber: **Josef Scheppach Maschinenfabrik GmbH & Co., Günzburger Strasse 69, D-8873 Ichenhausen (DE)**

(43) Veröffentlichungstag der Anmeldung:
**16.04.80 Patentblatt 80/8**

(72) Erfinder: **Kühl, Hans, Dipl.-Ing., Kornbergweg 12, D-7310 Plochingen (DE)**
Erfinder: **Müller, Heinz, Ing. grad., Elfelweg 5, D-7321 Sparwiesen (DE)**

(45) Bekanntmachung des Hinweises auf die Patenterteilung:
**06.01.82 Patentblatt 82/1**

(74) Vertreter: **Munk, Ludwig, Dipl.-Ing., Prinzregentenstrasse 1, D-8900 Augsburg (DE)**

(84) Benannte Vertragsstaaten:
**BE CH DE FR GB IT SE**

(56) Entgegenhaltungen:
**CH-A-280 370**
**DE-C-405 550**

## Kombinierte Heimwerkermaschine

Die Erfindung betrifft eine kombinierte Heimwerkermaschine mit einem vorzugsweise als Hobelmaschine ausgebildeten Grundgerät, an das wechselweise Zusatzgeräte anbaubar sind, bei der dem Grundgerät eine Hauptwelle und dem Zusatzgerät eine koaxial zur Hauptwelle angeordnete Nebenwelle zur Aufnahme auswechselbarer Werkzeuge bzw. Werkzeugträger zugeordnet sind und bei der die Hauptwelle und die Nebenwelle mittels eines gemeinsamen, mit einem Abtriebselement versehenen Motors alternativ antreibbar sind.

Der alternative Antrieb von Hauptwelle und Nebenwelle ist aus Sicherheitsgründen sehr erwünscht, da bei Arbeiten auf einem angebauten Zusatzgerät die Hobelwelle des Grundgeräts stillstehen soll und umgekehrt. Bei internen Versuchen fand hierzu eine koaxial zur Hauptwelle und zur Nebenwelle angeordnete Kupplungsscheibe Verwendung, die durch seitliches Verschieben einerseits mit der Hauptwelle und andererseits mit der Nebenwelle in Eingriff gebracht werden konnte. Bei einer derartigen Anordnung ist jedoch eine exakte Fluchtung von Hauptwelle, Nebenwelle und Kupplungsscheibe unbedingt erforderlich. Dies läßt sich mit vertretbarem fertigungstechnischen Aufwand praktisch nur dadurch erreichen, daß die Hauptwelle und die Kupplungsscheibe auf einem seitlich auskragenden Stummel der Hauptwelle gelagert sind. Da hierbei von einem feststehenden Durchmesser der Hauptwelle auszugehen ist und auch der die Nebenwelle und die Kupplungsscheibe aufnehmende Wellenstummel eine ausreichende Festigkeit aufweisen muß, und zudem der Durchmesser der Nebenwelle nicht zu groß sein soll, erfordert hier die Lagerung der Nebenwelle und der Kupplungsscheibe eine nicht unbeträchtlichen baulichen und konstruktiven Aufwand. Außerdem kommt es bei einer derartigen Anordnung, wie die Erfahrung gezeigt hat, auf Grund der nicht vermeidbaren Lagerreibung zu einer Mitnahme der jeweils nicht angetriebenen Welle, so daß man sich mit ein- und ausrückbaren Sperrstiften usw. behelfen muß, um tatsächlich einen exakten Stillstand der jeweils nicht angetriebenen Welle gewährleisten zu können. Die hier erforderlichen Sperrstifte erfordern jedoch nicht nur einen beträchtlichen Aufwand, sondern stellen gleichzeitig auch sehr verschleißanfällige Elemente dar. Außerdem hat sich gezeigt, daß hierbei bei Verwendung einer Stufenscheibe als Motor-Abtriebselement zur Gewährleistung unterschiedlicher Drehzahlen der das Motor-Abtriebselement und die hiervon angetriebene Kupplungsscheibe verbindende Riemen beim Wechsel von einer Geschwindigkeit auf die andere umgelegt werden muß, was nicht nur eine verstellbare Motoraufhängung in axialer und höhenmäßiger Richtung erfordert, sondern auch die Bedienung erschweren kann.

Aus der CH-A 260 370 ist eine Holzbearbeitungsmaschine mit einer Hobelwelle und einer neben dieser angeordneten mit einem Kreissägenblatt bestückten Zusatzwelle bekannt, bei der beide Wellen mittels eines gemeinsamen Motors antreibbar sind. Die Hobelwelle und die Zusatzwelle sind dort mit Antriebsriemenscheiben unterschiedlichen Durchmessers versehen. Der Motor ist mit einer über die Breite beider Antriebsriemenscheiben sich erstreckenden, auf seiner ganzen Breite gleichen Durchmesser aufweisenden Abtriebsriemenscheibe versehen. Zur drehschlüssigen Verbindung der Abtriebsriemenscheibe mit jeweils einer der nebeneinander angeordneten Antriebsriemenscheiben ist ein gemeinsamer Antriebsriemen vorgesehen, der durch Umlegen entweder mit der der Hobelwelle oder der der Zusatzwelle zugeordneten Antriebsriemenscheibe in Wirkverbindung gebracht werden kann, so daß die jeweils andere Welle stillgesetzt ist. Dieser einzige Antriebsriemen muß jedoch sowohl im Bereich der motorseitigen Abtriebsriemenscheibe als auch im Bereich der Wellen-Antriebsriemenscheiben von Hand umgelegt werden, was eine beiderseitige Zugänglichkeit erfordert und eine schwenkbare Lagerung des Motors notwendig macht. Der bei der bekannten Anordnung erforderliche Riemenwechsel erweist sich somit als sehr umständlich, zeitraubend und gefährlich. Ein weiterer Nachteil der aus der CH-A 260 370 entnehmbaren Anordnung ist darin zu sehen, daß diese keine Möglichkeit bietet, wenigstens eine der beiden Wellen mit zwei unterschiedlichen Geschwindigkeiten anzutreiben.

Aus der DE-C 405 550 ist ein Spindelstock für eine Gewindeschneideinrichtung mit einer Spindel und zwei nebeneinander angeordneten, dauernd angetriebenen Riemenscheiben bekannt, die durch in die Spindel eingelassene Verschiebekeile wahlweise mit der Spindel kuppelbar sind. Diese Riemenscheiben dienen hierbei jedoch lediglich zur Bewerkstelligung von Vor- und Rücklauf der Spindel. Für einen Antrieb von zwei nebeneinander angeordneten Wellen, die alternativ und mit wählbarer Geschwindigkeit angetrieben werden sollen, ist die aus der DE-C 405 550 entnehmbare Anordnung nicht geeignet.

Hiervon ausgehend ist es daher die Aufgabe der vorliegenden Erfindung, unter Vermeidung dieser Nachteile mit vertretbarem Aufwand eine Anordnung eingangs erwähnter Art zu schaffen, die hohe Freizügigkeit hinsichtlich der Lagerung der Nebenwelle ermöglicht und gleichzeitig mit einer starren Motoranordnung auskommt und die dennoch höchst bedienungsfreundlich ist und bei der außerdem die jeweils nicht angetriebene Welle zuverlässig stillgesetzt ist.

Die Lösung dieser Aufgabe gelingt gemäß der Erfindung in überraschend einfacher Weise dadurch, daß die Hauptwelle und die Nebenwelle mit jeweils einem eigenen Wellen-Antriebselement versehen sind, und daß zwischen dem Motor-Abtriebselement und den Wellen-Antriebselementen ein Rädersatz angeordnet ist, der eine der Zahl der Stufen des Motor-Abtriebselements entsprechende Zahl von Eingangsrädern, die mit der jeweils zugeordneten Abtriebsstufe in einer Ebene liegen und laufend hiervon angetrieben sind, und den Wellen-Antriebselementen jeweils zugeordnete, in Achsrichtung hierauf ausgerichtete Ausgangsräder aufweist, von denen das jeweils zugeordnete Wellen-Antriebselement antreibbar ist und die mittels eines Verschiebeglieds passivierbar bzw. aktivierbar sind, über das der Kraftfluß zwischen dem Motor-Abtriebselement und den Wellen-Antriebselementen läuft und das in mehrere Arbeitsstellungen verbringbar ist, in denen jeweils ein Wellen-Antriebselement mit dem Motor-Abtriebselement drehschlüssig verbunden und das jeweils andere Wellen-Antriebselement stillgesetzt ist.

Diese Maßnahme stellen sicher, daß eine ständige antriebsmäßige Kopplung des Motors mit dem Rädersatz vorliegen kann, was eine starre Motoranordnung ermöglicht, wodurch nicht nur die Motoraufhängung vereinfacht wird, sondern auch eine vielfach unerwünschte und umständliche Motorumstellung entfallen kann. Der in Verbindung mit dem Verschiebeglied ein Schaltgetriebe ergebende Rädersatz kann in vorteilhafter Weise aus dem Achsbereich der Wellen herausverlegt sein, so daß sich auch bei einer vielfach erwünschten koaxialen Anordnung von Haupt- und Nebenwelle eine einfache und dennoch stabile Lagerung der Nebenwelle mit verhältnismäßig geringem Platzbedarf verwirklichen läßt. Zum Aktivieren bzw. Passivieren der zu den Wellen-Antriebselementen führenden kinematischen Antriebszüge ist hierbei lediglich das Verschiebeglied zu verstellen, was eine höchst einfache und höchst sichere Bedienbarkeit gewährleistet. Durch die hier vorgenommene Entkopplung der Antriebselemente kann praktisch keine gegenseitige Mitnahme durch Lagerreibung erfolgen, so daß beispielsweise die auf die Nebenwelle aufgebauten Werkzeuge in Stellung bleiben können, wenn mit der Hobelwelle gearbeitet wird, da hiervon keinerlei Gefahr ausgehen kann. Dies wirkt sich vor allem dann vorteilhaft aus, wenn ein häufiger Wechsel von Arbeiten auf dem Grundgerät und auf dem angebauten Zusatzgerät erforderlich ist.

Eine vorteilhafte Ausgestaltung der übergeordneten Maßnahmen kann darin bestehen, daß die Wellen-Antriebselemente und die zugeordneten Ausgangsräder des Rädersatzes jeweils unmittelbar benachbarte, gleichen Durchmesser aufweisende Laufflächen für einen das Verschiebeglied bildenden Flachriemen aufweisen, der mittels einer Verschiebeeinrichtung über der gemeinsamen Breite der Wellen-Antriebselemente verschiebbar ist, die der gemeinsamen Breite der zugeordneten Ausgangsräder entspricht. Zweckmäßigerweise kann der Rädersatz dabei zwei frei gegeneinander drehbar gelagerte Radeinheiten mit jeweils einem Eingangsrad und mindestens einem fest hiermit verbundenen Ausgangsrad aufweisen. Diese Maßnahmen ergeben ersichtlich ein Riemenschaltgetriebe, das höchst einfach und daher kostengünstig zu verwirklichen ist.

Eine andere ganz besonders zu bevorzugende Ausführungsform kann darin bestehen, daß der Rädersatz im Dauereingriff mit jeweils einem zugeordneten, in einer Ebene hiermit angeordneten Wellen-Antriebselement stehende Ausgangsräder aufweist, die frei drehbar neben den im Dauereingriff mit dem Motor-Abtriebselement stehenden Eingangsrädern angeordnet sind, und daß die Ein- und Ausgangsräder mit Kupplungselementen versehen sind, die mit zugeordneten Kupplungselementen des Verschiebeglieds in Eingriff bringbar sind, das gegenüber dem Rädersatz frei drehbar gelagert ist und in jeder Arbeitsstellung jeweils ein Eingangsrad und ein Ausgangsrad des Rädersatzes drehschlüssig miteinander verbindet. Bei dieser Ausführungsform stehen in vorteilhafter Weise sämtliche Räder des Rädersatzes im Dauereingriff mit den jeweils zugeordneten Wellen-Antriebselementen bzw. der jeweils zugeordneten Stufe des Motor-Abtriebselements, was nicht nur eine freie Wahl der zu den Wellen-Antriebselementen bzw. zum Motor-Abtriebselement führenden Treibmittel, sondern gleichzeitig auch eine freie Wahl der Raddurchmesser ermöglicht, so daß praktisch jedes gewünschte Übersetzungsverhältnis unter Einhaltung gedrängter Abmessungen zu bewerkstelligen ist.

Mit Vorteil kann dabei das Verschiebeglied so angeordnet sein, daß dieses den Rädersatz koaxial durchsetzt. Diese Maßnahme ergibt nicht nur eine sehr gedrängte Bauweise, sondern gewährleistet gleichzeitig einen ausreichenden Stoß- und Staubschutz des Verschiebeglieds. Die Kupplungselemente können dabei zweckmäßig als durch Axialverschiebung miteinander in Eingriff bringbare Verzahnungen ausgebildet sein, was eine verhältnismäßig einfache Herstellung und dennoch eine robusten Anforderungen ohne weiteres gewachsene Ausgestaltung ermöglicht.

Weitere Merkmale und Vorteile der Erfindung ergeben sich aus der nachstehenden Beschreibung einiger Ausführungsbeispiele anhand der Zeichnung in Verbindung mit den restlichen Ansprüchen.

Hierbei zeigt

Fig. 1 ein Ausführungsbeispiel der Erfindung mit einem als Zahnrad-Schaltgetriebe ausgebildeten Rädersatz,

Fig. 2 eine vergrößerte Darstellung des zugehörigen Rädersatzes und

Fig. 3 eine schematische Darstellung eines weiteren Ausführungsbeispiels mit einem das Verschiebeglied bildenden Flachriemen.

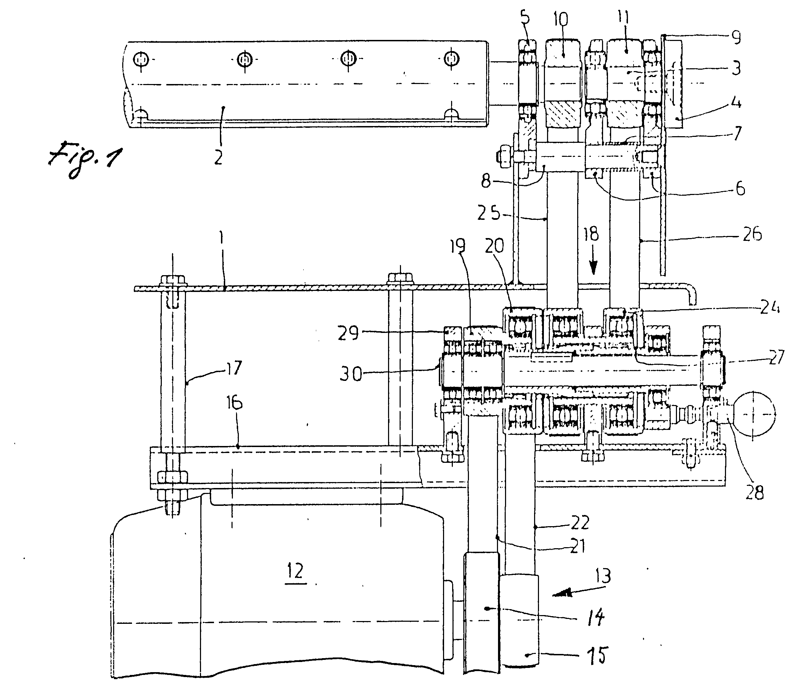

In Fig. 1 ist bei 1 das Maschinengestell einer Heimwerker-Hobelmaschine angedeutet, die eine hier als Hauptwelle anzusehende Hobelwelle 2 aufweist, die beidseitig im Maschinengestell 1 gelagert ist. Die das Grundgerät einer Heimwerker-Ausstattung bildende Hobelmaschine soll mit hieran anbaubaren, in Fig. 1 nicht näher dargestellten Zusatzgeräten, beispielsweise einer Langlochbohreinrichtung, einer Schleifeinrichtung, einer Drechseleinrichtung etc., kombinierbar sein. Der Aufbau und die Wirkungsweise der hierfür benötigten Anbauvorrichtung ist an sich bekannt und bedarf hier keiner näheren Erläuterung mehr. Den Zusatzgeräten ist eine hier vorteilhaft auf gleicher Höhe wie die Hobelwelle und koaxial hierzu angeordnete Nebenwelle 3 zugeordnet, die mit einem Aufnahmekopf 4 zur Aufnahme auswechselbarer Werkzeuge bzw. Werkzeugträger, wie beispielsweise eines Bohrerspannfutters etc. versehen ist. Die Nebenwelle 3 ist ein von der Hobelwelle 2 völlig unabhängiges Bauteil, das außerhalb von dieser gelagert ist. Hierzu sind im dargestellten Ausführungsbeispiel parallel zum benachbarten Lagerbock 5 der Hobelwelle 2 angeordnete Lagerböcke 6 vorgesehen, die durch eine Distanzbuchse 7 auf Abstand gehalten und mittels geeigneter Bolzen 8 am Maschinengestell 1 festgelegt sind. Zur seitlichen Abdeckung der Nebenwelle 3 ist eine ebenfalls an den Bolzen 8 festgelegte Blende 9 vorgesehen, die eine Durchtrittsöffnung für den Aufnahmekopf 4 aufweist.

Die Hobelwelle 2 und die Nebenwelle 3 sind mit jeweils einem eigenen, im dargestellten Ausführungsbeispiel als Flachriemenscheibe jeweils gleichen Durchmessers ausgebildeten Antriebselement 10 bzw. 11 ausgestattet. Das der Hobelwelle 2 zugeordnete Antriebselement 10 ist dabei einfach auf einen über den seitlichen Lagerbock 5 auskragenden Zapfen aufgesetzt. Das der Nebenwelle 3 zugeordnete Antriebselement 11 ist zweckmäßig im Bereich zwischen den Lagerböcken 6 angeordnet, was einen großen Lagerabstand ermöglicht und sich daher günstig auf die zu erwartende Biegebelastung der Nebenwelle 3 auswirkt. Das zum Antrieb der Wellen 2 bzw. 3 benötigte Drehmoment wird von einem Antriebsmotor 12 abgenommen, der mit einem als Ganzes mit 13 bezeichneten Abtriebselement versehen ist. Im dargestellten Ausführungsbeispiel ist das Motor-Abtriebselement 13 als zweistufige Stufenscheibe mit einer Schnelllaufstufe 14 und einer Langsamlaufstufe 15 ausgebildet, so daß zum Antrieb der Wellen 2 bzw. 3 zwei Geschwindigkeiten zur Verfügung stehen. Im dargestellten Ausführungsbeispiel soll lediglich die Nebenwelle 3, die unterschiedlichen Zusatzgeräten zugeordnet ist, mit zwei verschiedenen Geschwindigkeiten antreibbar sein. Der Motor 12 ist mit gegenüber den Wellen 2 bzw. 3 achsparallel ausgerichtetem Abtriebselement 13 an einem Zwischenboden 16 festgelegt, der durch Bolzen 17 am Maschinengestell 1 befestigt ist. Im Bereich der vom Motor 12 zu den Wellen-Antriebselementen 10 bzw. 11 führenden kinematischen Antriebszüge ist ein als Ganzes mit 18 bezeichneter Rädersatz vorgesehen, der etwa achsparallel zu den Wellen 2 bzw. 3 und zum Motor-Abtriebselement 13 ausgerichtet ist. Der Rädersatz 18 ist auf weiter unten noch näher beschriebene Weise auf einer seitlichen Verlängerung des Zwischenbodens 16 gelagert. Der Rädersatz 18 hat die Aufgabe, das vom Motor 12 abgegebene Drehmoment an jeweils eine der Wellen 2 bzw. 3 weiterzuleiten, und zwar unter automatischer Abschaltung der jeweils nicht beaufschlagten Welle.

Der Rädersatz 18 besitzt eine der Stufenzahl des Motor-Abtriebselements 13 entsprechende Zahl von Eingangsrädern, im dargestellten Beispiel demnach zwei den Stufen 14 bzw. 15 zugeordnete Eingangsräder 19 und 20. Die Eingangsräder 19 und 20 sind in Achsrichtung auf die jeweils zugeordnete Stufe 14 bzw. 15 des Motor-Abtriebselements 13 ausgerichtet und drehschlüssig hiermit verbunden. Hierzu finden im dargestellten Ausführungsbeispiel Flachriemen 21 bzw. 22 Verwendung. Die Eingangsräder 19 und 20 sowie die Stufen 14 bzw. 15 des Motor-Abtriebselements 13 sind daher als einfache Flachriemenscheiben ausgebildet. Der Rädersatz 18 besitzt ferner eine der Zahl der Wellen-Antriebselemente entsprechende Zahl von Ausgangsrädern, im dargestellten Ausführungsbeispiel demnach zwei den Wellen-Antriebselementen 10 bzw. 11 zugeordnete Ausgangsräder 23 und 24. Die Ausgangsräder 23 und 24 sind in Achsrichtung auf das jeweils zugeordnete Wellen-Antriebselement 10 bzw. 11 ausgerichtet und drehschlüssig hiermit verbunden. Im dargestellten Ausführungsbeispiel finden hierzu Flachriemen 25 bzw. 26 Verwendung. Die Ausgangsräder 23 und 24 sowie die Wellen-Antriebselemente 10 und 11 sind daher ebenfalls als Flachriemenscheiben ausgebildet. Sämtliche Räder 19, 20, 23, 24 des Rädersatzes 18 sind gegeneinander frei drehbar gelagert. Bei eingeschaltetem Motor werden beide Eingangsräder 19 bzw. 20 gleichzeitig angetrieben, wobei durch den Durchmesserunterschied im Bereich der Stufen 14 und 15 des Motor-Abtriebselements 13 und im dargestellten Ausführungsbeispiel durch den gleichzeitig vorhandenen Durchmesser-Unterschied im Bereich der Eingangsräder 19 und 20 unterschiedliche Drehzahlen erreicht werden. Zur Übertragung des Drehmoments von den Eingangsrädern 19 bzw. 20 auf jeweils eines der Ausgangsräder 23 bzw. 24 ist ein Verschiebeglied 27 vorgesehen, das gegenüber den Rädern des Rädersatzes 18 axial verstellbar und frei drehbar gelagert ist. Das Verschiebeglied 27 ist mittels eines Schalthebels 28 in mehrere Arbeitsstellungen verbringbar, in denen jeweils ein aus einem Eingangsrad und einem Ausgangsrad bestehendes Räderpaar aktiviert und das jeweils andere Räderpaar passiviert ist. Hierzu sind die Räder des Rädersatzes 18 mit Kupplungselementen versehen, die mit Kupplungselementen des Verschiebeglieds 27 so in und außer Eingriff bringbar sind, daß lediglich nur ein Räderpaar drehschlüssig miteinander verbunden ist.

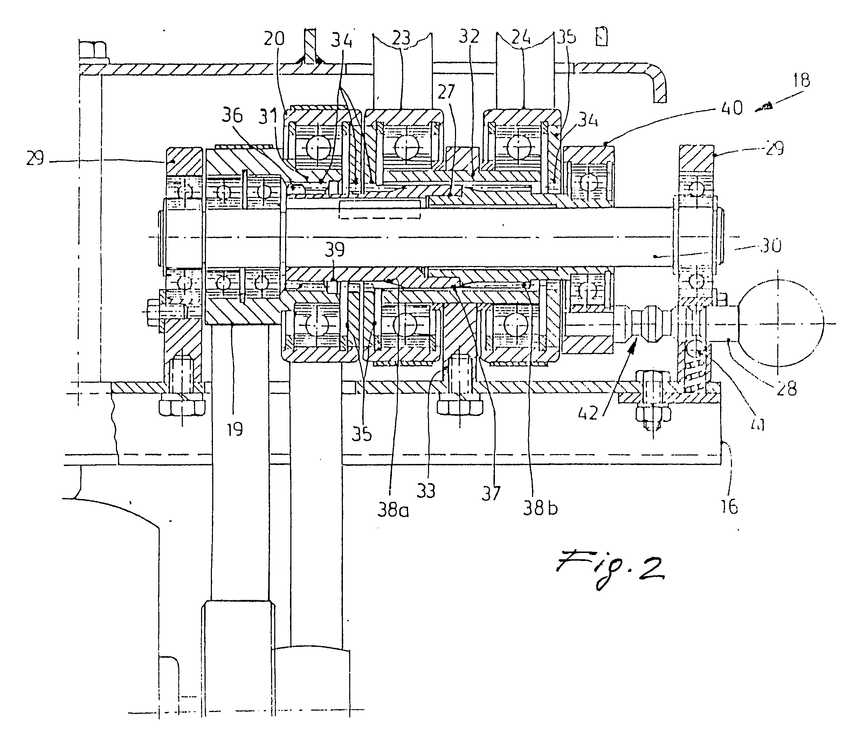

Im dargestellten Ausführungsbeispiel sind, wie anschaulich aus Fig. 2 erkennbar ist, die Räder des Rädersatzes 18 in koaxial nebeneinander angeordnet. Diese koaxial nebeneinander angeordneten Räder 19, 20, 23 und 24 werden vom Verschiebeglied 27 zentral durchsetzt, was ersichtlich eine sehr gedrängte und daher platzsparende Bauweise ermöglicht. Das Verschiebeglied 27 ist im dargestellten Ausführungsbeispiel als Büchse ausgebildet, die mit axialem Freiheitsgrad drehschlüssig auf einer durchgehenden, an ihren Enden in Lagerböcken 29, die auf dem Zwischenboden 16 aufgebaut sind, drehbar gelagerten Achse 30 angeordnet ist. Das äußere Eingangsrad 19 des Rädersatzes 18 ist vorteilhaft direkt auf der Achse 30 gelagert. Der entsprechende Lagerring stellt dabei in vorteilhafter Weise einen axialen Anschlag für das Verschiebeglied 27 dar. Im dargestellten Ausführungsbeispiel ist das äußere Eingangsrad 19 mit einem seitlichen, büchsenförmigen Flansch 31 versehen, auf dem das weitere Eingangsrad 20 gelagert ist. Die Ausgangsräder 23 und 24 sind zweckmäßig auf einer gemeinsamen Büchse 32 welche vom Verschiebeglied 27 durchsetzt ist. Die Büchse 32 kann vorteilhaft mittels eines zwischen den Ausgangsrädern 23 und 24 angeordneten Lagerbocks 33 mit dem Zwischenboden 16 verbunden sein.

Die Räder 19, 20 sowie 23 und 24 des Rädersatzes 18 sind zur Bildung der oben erwähnten Kupplungselemente mit jeweils einen innen verzahnten Zahnkranz 34 versehen. Bei dem den seitlichen Flansch 31 aufweisenden Rad 19 kann hierzu einfach der radial innere Flanschumfang mit einer entsprechenden Verzahnung versehen sein. Die flanschlosen Räder 20, 23 und 24 des Rädersatzes 18 sind mit die jeweils zugeordnete Lagerbüchse übergreifenden, eine zentrale Bohrung aufweisenden, jeweils stirnseitig angeordneten Deckeln 35 versehen, die im Bereich der genannten Bohrung mit einem Innenzahnkranz 34 versehen sind. Dadurch, daß die Deckel 35 der Ausgangsräder 23 und 24 auf den voneinander abgewandten Rad-Stirnseiten angeordnet sind, ist es möglich, die Räder 23 und 24 auf der gemeinsamen durchgehenden Büchse 32 zu lagern. Das Verstellglied 27 weist eingangsseitig einen den Innenzahnkränzen 34 der Eingangsräder 19 und 20 zugeordneten Umfangszahnkranz 36 auf. Ausgangsseitig kann ebenfalls ein den Innenzahnkränzen 34 der Ausgangsräder 23 und 24 zugeordneter Umfangszahnkranz vorgesehen sein. In Fällen, in denen die verzahnten Deckel 35 der Ausgangsräder 23 und 24, wie im dargestellten Ausführungsbeispiel, relativ großen axialen Abstand voneinander aufweisen, ist die ausgangsseitige Umfangsverzahnung des Stellglieds 27 zweckmäßig durch einen mittleren Steg 37 unterbrochen, so daß sich ausgangsseitig zwei Zahnkränze 38a und 38b ergeben. Zwischen der eingangsseitigen und ausgangsseitigen Umfangsverzahnung des Verstellglieds 27 ist eine Nut 39 vorgesehen, in welche der im Falle eines Eingriffs der Umfangsverzahnung 36 in die Innenverzahnung 34 des Eingangsrads 19 der Innenzahnkranz 34 des benachbarten Eingangsrads 20 hineinragt und somit ohne Zahneingriff ist. Der lichte Abstand der Deckel 35 und damit der hier vorgesehenen Innenzahnkränze 34 der Ausgangsräder 23 und 24 entspricht zumindest Stirnseitenabstand der ausgangsseitigen Umfangsverzahnung 38a, 38b des Verstellglieds 27, so daß in der Mittelstellung der Umfangsverzahnung 38a, 38b die Verzahnungen beider Räder 23, 24 außer Eingriff sind. Zweckmäßigerweise kann dabei zur Gewährleistung einer sauberen Antriebstrennung ausreichend Laufspiel vorgesehen sein. Eingangsseitig besitzen die Umfangsverzahnungen 34 der Eingangsräder 19, 20 solchen lichten Abstand, daß in einer Mittelstellung des zugeordneten Umfangszahnkranzes 36 auf keiner Seite Zahneingriff erfolgt. Bei einer Ausführungsform, bei welcher der erforderliche lichte Abstand zwischen den Eingangsräder-Zahnkränzen bzw. den Ausgangsräder-Zahnkränzen nicht zu bewerkstelligen ist, kann man sich praktisch mit einer Umkehr des im dargestellten Ausführungsbeispiel zur Anwendung kommenden Verzahnungsbilds von Innenverzahnung und Außenverzahnung behelfen. In diesem Fall sind beispielsweise die einander dicht benachbarten Zahnkränze 34 der Ausgangsräder 23 und 24 von Umfangszahnkränzen des Verschiebeglieds flankiert, deren lichter Abstand zumindest der gemeinsamen Breite der zugeordneten Zahnkränze der genannten Ausgangsräder 23 und 24 entspricht. Dasselbe gilt auch für die Eingangsseite. Die dargestellte Ausführungsform gewährleistet demgegenüber jedoch eine in axialer Richtung besonders gedrängte Bauweise. Die einander jeweils zugeordneten Innen- bzw. Außenzahnkränze weisen jeweils etwa gleichen Teilkreisdurchmesser auf, so daß eine axiale Verstellung des Verschiebeglieds 27 erfolgen kann. Im dargestellten Ausführungsbeispiel sind sämtliche Zahnkränze 34, 36, 38 mit gleichem Teilkreisdurchmesser versehen.

Im dargestellten Ausführungsbeispiel soll die Hobelwelle 2 lediglich mit der höheren, von der Stufe 14 des Motor-Abtriebselements 13 abgenommenen Geschwindigkeit antreibbar sein. Die Nebenwelle 3 soll dagegen, wie weiter oben bereits erwähnt, mit jeder der Stufen 14, 15 des Motor-Abtriebselements verbindbar sein. Das der Schnellauf-Stufe 14 zugeordnete Eingangsrad 19 des Rädersatzes 18 wird daher mehrfach, d. h. sowohl beim Antrieb der Hobelwelle 2 als auch beim Antrieb der Nebenwelle 3 benötigt. Dasselbe gilt für das dem Antriebselement 11 der mit mehreren Geschwindigkeiten antreibbaren Nebenwelle 3 zugeordnete Ausgangsrad 24, das sowohl mit dem der Schnellauf-Stufe 14 zugeordneten Eingangsrad 19 als auch mit dem der Langsamlauf-Stufe 15 zugeordneten Eingangsrad 20 kuppelbar sein soll. Hierzu weist der Innenzahnkranz 34 des mehrfach benötigten Eingangsrads 19 solche Breite auf, daß er im sicheren Eingriff mit dem zugeordneten Umfangszahnkranz 36 des Verschiebeglieds 27 bleibt, wenn dieses so weit verschoben wird, daß die ausgangsseitige Umfangsverzahnung 38a, 38b im Bereich der einen Stirnseite außer Eingriff gebracht wird und im Bereich der anderen Stirnseite in Eingriff kommt. Die benötigte Verzahnungsbreite im Bereich des mehrfach benötigten Eingangsrads 19 beträgt demnach zumindest das Doppelte des einfachen Zahneingriffs. Dasselbe gilt im dargestellten Ausführungsbeispiel für den Bereich des hier mehrfach benötigten Ausgangsrads 24. Hier ist sowohl in einer Stellung des Verschiebeglieds 27, in welcher der Umfangszahnkranz 36 mit dem Innenzahnkranz 34 des Eingangsrads 19 als auch mit dem Innenzahnkranz 34 des weiteren Eingangsrads 20 zusammenwirkt, Zahneingriff erforderlich. Die erforderliche Verzahnungsbreite muß daher dem zur Bewerkstelligung der beiden Verstellgliedstellungen erforderlichen Verschiebeweg zumindest entsprechen. Im dargestellten Ausführungsbeispiel weist hierzu der Umfangszahnkranz 38b eine Breite auf, die etwa der doppelten Breite des Umfangszahnkranzes 36 und der Breite der hiervon noch zu überwindenden Nut 39 entspricht. Die Breitenverhältnisse lassen sich zwischen Innenverzahnung und Außenverzahnung selbstverständlich umdrehen.

Auf dem dem auf der Achse 30 gelagerten Eingangsrad 19 gegenüberliegenden Ende der das Verstellglied 27 bildenden Büchse ist ein Ring 40 drehbar gelagert, an welchem der Schalthebel 28 angreift. Im dargestellten Ausführungsbeispiel ist der Schalthebel 28 durch den benachbarten Lagerbock 29 hindurchgeführt. Eine im Lagerbock 29 vorgesehene, federbelastete Kugel 41 dient dabei zur Festlegung des mit entsprechenden Rastnuten 42 versehenen Schalthebels 28 in den verschiedenen Arbeitsstellungen. Im dargestellten Ausführungsbeispiel mit einfach benötigtem Ausgangsrad 23 und zweifach benötigtem Ausgangsrad 24 ist der Schalthebel 28 dementsprechend mit drei Rastnuten 42 versehen. In der der Fig. 2 zugrunde liegenden Stellung des Verschiebeglieds 27 sind das Eingangsrad 19 und das Ausgangsrad 23 drehschlüssig miteinander verbunden. Wenn nun der Schalthebel 28 in der Darstellung nach Fig. 2 nach rechts gezogen wird, so daß die Kugel 41 in die mittlere Rastnut 42 einrastet, wird das Eingangsrad 19 vom Ausgangsrad 23 getrennt und mit dem Ausgangsrad 24 verbunden. Wenn der Schalthebel 28 noch weiter nach rechts gezogen wird, so daß die Kugel 41 in die linke Umfangsnut 42 eingreift, wird das Ausgangsrad 24 vom Eingangsrad 19 getrennt und mit dem Eingangsrad 20 verbunden.

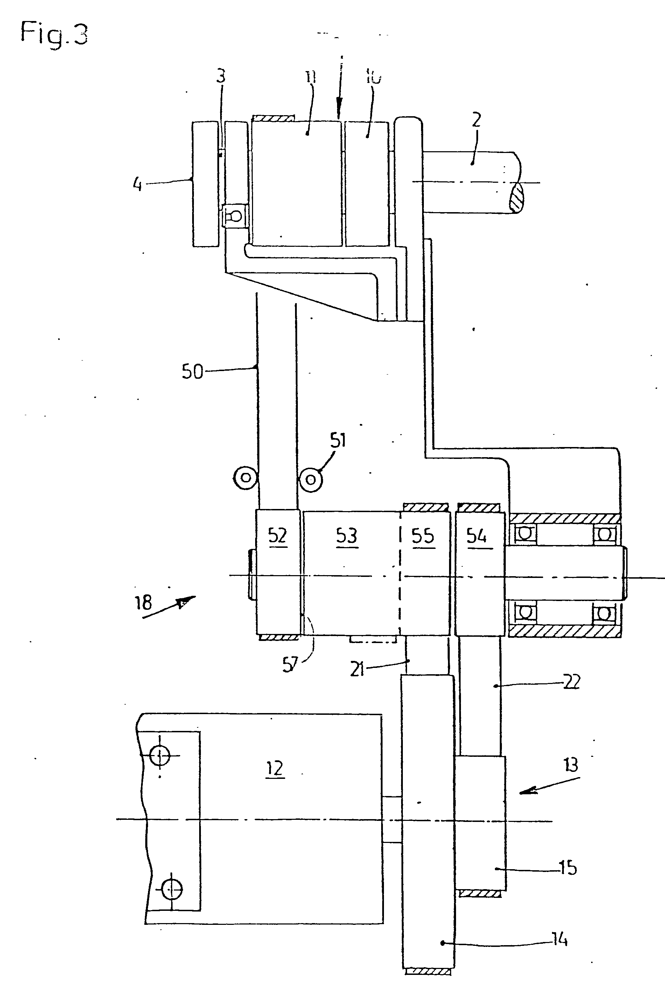

Der grundsätzliche Aufbau der nachstehend beschriebenen Ausführungsform gemäß Fig. 3 entspricht der Ausführungsform gemäß Fig. 1. Für gleichbleibende Teile finden daher der Einfachheit halber gleiche Bezugzeichen Verwendung. Bei der in Fig. 3 dargestellten Ausführungsform mit einem Riemenschaltgetriebe ist zur Verbindung des zwischen dem Motor 12 und den Wellen-Antriebselementen 10 bzw. 11 angeordneten Rädersatzes 18 mit den Wellen-Antriebselementen 10 bzw. 11 ein Flachriemen 50 vorgesehen. Dieser Flachriemen 50, der mittels einer bei 51 angedeuteten Verschiebeeinrichtung in Achsrichtung der zugeordneten Riemenscheiben verstellbar ist, bildet hier das Verschiebeglied. Die mit dem verschiebbaren Flachriemen 50 in Wirkverbindung bringbaren Wellen-Antriebselemente 10 bzw. 11 sowie die entsprechenden Ausgangsräder 52 bzw. 53 des Rädersatzes 18 weisen einander jeweils unmittelbar benachbarte Riemenlaufflächen gleichen Durchmessers auf, so daß der das Verschiebeglied bildende Flachriemen 50 über der gesamten gemeinsamen Breite der Wellen-Antriebselemente 10 und 11 bzw. der entsprechenden Ausgangsräder 52 und 53 des Rädersatzes 18 verschiebbar ist. Die Ausgangsräder 52 und 53 sind dabei so auf die Wellen-Antriebselemente 10, 11 auszurichten, daß die äußeren Stirnflächen in etwa in einer Ebene liegen. Die Ausgangsräder 52 und 53 des Rädersatzes sind jeweils mit einem zugeordneten Eingangsrad 54 bzw. 55 fest verbunden, was praktisch zwei frei drehbar gelagerte Radeinheiten mit jeweils einem Eingangsrad und einem Ausgangsrad ergibt. In Fällen, in denen die zu einer Radeinheit zusammengefaßten Räder eine gemeinsame Stoßkante aufweisen, wie im dargestellten Ausführungsbeispiel die Räder 53 und 55, kann zur Bildung dieser Einheit einfach ein einteiliger Körper mit entsprechenden Riemenlaufflächen vorgesehen sein.

Die Eingangsräder 54 und 55 stehen in laufendem Eingriff mit dem Motor-Abtriebselement 13. Das mit dem Ausgangsrad 52 verbundene Eingangsrad 54 ist über den Riemen 22 mit der Langsamlauf-Stufe 15, das mit dem Ausgangsrad 53 verbundene Eingangsrad 55 ist über den Riemen 21 mit der Schnellauf-Stufe 14 des Motor-Abtriebselements 13 verbunden. Im dargestellten Ausführungsbeispiel soll nun die den Aufnahmekopf 4 aufweisende Nebenwelle 3 mit einer höheren und einer niedrigeren Geschwindigkeit und die Hobelwelle 2 lediglich mit der höheren Geschwindigkeit antreibbar sein. Hierzu ist das Ausgangsrad 53 der mit der Schnellauf-Stufe 14 gekoppelten Radeinheit des Rädersatzes 18 mit gegenüber dem Flachriemen 50 doppelt breiter Lauffläche versehen und bezüglich der Stoßfuge 56 zwischen den Wellen-Antriebsrädern 10 und 11 etwa mittig angeordnet. Der verschiebbare Flachriemen 50 kommt daher auf jeder Hälfte des doppelt benötigten und daher doppelt breiten Ausgangsrads 53 zum Eingriff mit jeweils einem Wellen-Antriebselement 10 bzw. 11 wobei das andere Wellen-Antriebselement 11 bzw. 10 außer Betrieb ist. Das der Nebenwelle 3, die mit zwei Geschwindigkeiten antreibbar sein soll, zugeordnete, demnach ebenfalls doppelt benötigte Antriebselement 11 weist ebenfalls doppelte Riemenbreite auf und ist gegenüber der Stußfuge 57 zwischen den einander benachbarten Ausgangsrädern 52 und 53 mittig angeordnet, so daß der Flachriemen 50 auf der einen Hälfte des Wellen-Antriebselements 11 gleichzeitig auf dem mit der Schnellauf-Stufe 14 gekoppelten Ausgangsrad 53 und auf der anderen Hälfte gleichzeitig auf dem mit der Langsamlauf-Stufe 15 gekoppelten Ausgangsrad 52 läuft. Diese zuletzt genannte Stellung liegt der Fig. 3 zugrunde.

Die vorstehenden Ausführungen lassen erkennen, daß in jeder Arbeitsstellung des erfindungsgemäßen Verschiebeglieds 27 bzw. 50 lediglich eine Welle 2 bzw. 3 angetrieben ist. Die jeweils andere Welle ist dabei automatisch stillgesetzt. Die aufgebauten Werkzeuge können dabei ohne weiteres in Stellung bleiben, da hiervon infolge der automatischen Stillsetzung keine Gefahr zu befürchten ist.

**Patentansprüche**

1. Kombinierte Heimwerkermaschine mit einem vorzugsweise als Hobelmaschine ausgebildeten Grundgerät, an das wechselweise Zusatzgeräte anbaubar sind, bei der dem Grundgerät eine Hauptwelle (2) und den Zusatzgeräten eine koaxial zur Hauptwelle (2) angeordnete Nebenwelle (3) zur Aufnahme auswechselbarer Werkzeuge bzw. Werkzeugträger zugeordnet sind und bei der die Hauptwelle (2) und die Nebenwelle (3) mittels eines gemeinsamen, mit einem Abtriebselement (13) versehenen Motors (12) alternativ antreibbar sind, dadurch gekennzeichnet, daß die Hauptwelle (2) und die Nebenwelle (3) mit jeweils einem eigenen Wellen-Antriebselement (10 bzw. 11) versehen sind, und daß zwischen dem Motor-Abtriebselement (13) und den Wellen-Antriebselementen (10 bzw. 11) ein Rädersatz (18) angeordnet ist, der eine der Zahl der Stufen (14, 15) des Motor-Abtriebselements (13) entsprechende Zahl von Eingangsrädern (19, 20; 54, 55), die mit der jeweils zugeordneten Stufe des Motor-Abtriebselements (13) in einer Ebene liegen und laufend hiervon angetrieben sind und der den Wellen-Antriebselementen (10, 11) jeweils zugeordnete, in Achsrichtung hierauf ausgerichtete Ausgangsräder (23, 24; 52, 53) aufweist, von denen das jeweils zugeordnete Wellen-Antriebselement antreibbar ist und die mittels eines Verschiebeglieds (27; 50) passivierbar bzw. aktivierbar sind, über welches der Kraftfluß zwischen dem Motor-Abtriebselement (13) und den Wellen-Antriebselementen (10 bzw. 11) läuft und das in mehrere Arbeitsstellungen verbringbar ist, in denen jeweils ein Wellen-Antriebselement (10, 11) mit dem Motor-Abtriebselement (13) drehschlüssig verbunden und das jeweils andere Wellen-Antriebselement stillgelegt ist.

2. Kombinierte Heimwerkermaschine nach Anspruch 1, dadurch gekennzeichnet, daß die Wellen-Antriebselemente (10, 11) und die zugeordneten Ausgangsräder (52, 53) jeweils unmittelbar benachbarte, gleichen Durchmesser aufweisende Laufflächen für einen das Verschiebeglied bildenden Laufflächen für einen das Verschiebeglied bildenden Flachriemen (50) aufweisen, der mittels einer Verschiebeeinrichtung (51) über der gemeinsamen Breite der Wellen-Antriebselemente (10 bzw. 11) verschiebbar ist, welche der gemeinsamen Breite der zugeordneten Ausgangsräder (52, 53) entspricht, wobei, falls eine der Wellen mit mehreren Geschwindigkeiten antreibbar ist, die Lauffläche des Antriebselements (11) der mit mehreren Geschwindigkeiten antreibbaren Welle (3) eine Breite von einer Riemenbreite pro Geschwindigkeit aufweist und diesem Antriebselement (11) pro Riemenbreite ein Ausgangsrad (52 bzw. 53) zugeordnet ist und wobei, falls beide Wellen mindestens eine gemeinsame Antriebsgeschwindigkeit benötigen, beiden Wellen-Antriebselementen (10 bzw. 11) zumindest ein gemeinsames, bezüglich ihrer Trennfuge (56) mittig angeordnetes Ausgangsrad (53) zugeordnet ist, das eine Breite von mindestens einer Riemenbreite pro zugeordnetem Wellen-Antriebselement aufweist.

3. Kombinierte Heimwerkermaschine nach wenigstens einem der vorhergehenden Ansprüche 1 und 2, dadurch gekennzeichnet, daß der Rädersatz (18) zwei frei gegeneinander drehbar gelagerte Radeinheiten mit jeweils einem Eingangsrad (54 bzw. 55) und einem fest hiermit verbundenen Ausgangsrad (52 bzw. 53) aufweist.

4. Kombinierte Heimwerkermaschine nach Anspruch 1, dadurch gekennzeichnet, daß der Rädersatz (18) im Dauereingriff mit jeweils einem zugeordneten, in einer Ebene hiermit angeordneten Wellen-Antriebselement (10 bzw. 11) stehende Ausgangsräder (23, 24) aufweist, die frei drehbar neben den im Dauereingriff mit dem Motor-Abtriebselement (13) stehenden Eingangsrädern (19 bzw. 20) angeordnet sind, und daß die Ein- und Ausgangsräder (19, 20, 23, 24) mit Kupplungselementen (34) versehen sind, die mit zugeordneten Kupplungselementen (36, 38) des vorzugsweise den Rädersatz (18) koaxial durchsetzenden Verschiebeglieds (27) in Eingriff bringbar sind, das gegenüber dem Rädersatz (18) frei drehbar gelagert und in jeder Arbeitsstellung jeweils ein Eingangsrad (19 bzw. 20) und ein Ausgangsrad (23 bzw. 24) drehschlüssig miteinander verbindet.

5. Kombinierte Heimwerkermaschine nach Anspruch 4, dadurch gekennzeichnet, daß die Kupplungselemente (34 bzw. 37, 38) als durch Axialverschiebung miteinander in Eingriff bringbare Verzahnungen ausgebildet sind, wobei die Ein- und Ausgangsräder des Rädersatzes (18) vorzugsweise mit jeweils einem Innenzahnkranz (34) versehen sind, denen verschiebegliedseitig zumindest zwei durch eine Freilaufnut (39), deren Breite zumindest der einfachen Zahneingriffsbreite entspricht, voneinander getrennte Umfangszahnkränze (36, 38) zugeordnet sind, wobei, falls beide Wellen mindestens eine gemeinsame Antriebsgeschwindigkeit benötigen, die im Bereich des dieser Geschwindigkeit zugeordneten Eingangsrads (19) zum Eingriff kommende Verzahnung des Eingangsrads (19) bzw. des Verschiebeglieds (27) einerseits einfache und andererseits zumindest doppelte Eingriffsbreite aufweist, und wobei, falls mindestens eine Welle mit mehreren Geschwindigkeiten antreibbar ist, die im Bereich des der mit mehreren Geschwindigkeiten antreibbaren Welle (3) zugeordneten Ausgangsrads (24) zum Eingriff kommende Verzahnung des Ausgangsrads (24) bzw. des Verschiebeglieds (27) einerseits einfache und andererseits zumindest doppelte Eingriffsbreite aufweist.

6. Kombinierte Heimwerkermaschine nach wenigstens einem der vorhergehenden Ansprüche 4 und 5, dadurch gekennzeichnet, daß der Rädersatz (18) von einer durchgehenden Achse (30) durchsetzt ist, die an ihren Enden drehbar gelagert ist und auf der eine das Verschiebeglied (27) bildende Büchse drehfest und mit axialem Freiheitsgrad angeordnet ist, wobei vorzugsweise ein äußeres Rad (19) des Rädersatzes (18) direkt auf der durchgehenden Achse (30) und die übrigen Räder (20, 23, 24) des Rädersatzes (18) auf die Achse (30) und das Verschiebeglied (27) umgebenden büchsenförmigen Flanschen (31, 32) gelagert sind.

7. Kombinierte Heimwerkermaschine nach Anspruch 6, dadurch gekennzeichnet, daß das auf der Achse (30) gelagerte Rad (19) einen zeitlichen, mit einem Innenzahnkranz (34) versehenen, büchsenförmigen Flansch (31) aufweist, auf dem das benachbarte Rad (20) gelagert ist, und daß das weitere Räderpaar (23, 24) auf einer gemeinsamen, feststehenden Büchse (32) gelagert ist, wobei die auf Büchsen (31, 32) gelagerten Räder (20 bzw. 23, 24) mit jeweils einem Innenzahnkranz (34) aufweisenden, die zugehörige Büchse (31 bzw. 32) übergreifenden, stirnseitig angeordneten Deckeln (35) versehen sind.

8. Kombinierte Heimwerkermaschine nach wenigstens einem der vorhergehenden Ansprüche 4 bis 7, dadurch gekennzeichnet, daß die das Verschiebeglied (27) bildende Büchse auf der vom direkt auf der durchgehenden Achse (30) gelagerten Rad (19) abgewandten Seite mit einem in axialer Richtung verstellbaren Schalthebel (28) verbunden ist.

9. Kombinierte Heimwerkermaschine nach wenigstens einem der vorhergehenden Ansprüche, dadurch gekennzeichnet, daß der Motor (12) starr auf einem Zwischenboden (16) befestigt ist, der eine das Motor-Abtriebselement (13) in axialer Richtung überragende Verlängerung aufweist, auf welcher die Lagerböcke (29 bzw. 33) der den Rädersatz (18) durchsetzenden Achse (30) bzw. der die Ausgangsräder (23, 24) aufnehmenden Büchse (32) befestigt sind.

10. Kombinierte Heimwerkermaschine nach wenigstens einem der vorhergehenden Ansprüche, dadurch gekennzeichnet, daß die Nebenwelle (3) beiderseits des Antriebselements (11) auf Lagerböcken (6) abgestützt ist, die durch Distanzbolzen (8) mit dem Maschinengestell (1) verbunden sind.

**Claims**

1. A combined machine tool for hobby purposes with a base or main unit, more specially designed as a planing machine, on which further units may be fixed and taken off as desired, in the case of which the base unit has a main shaft (2) and the further units have a further shaft (3) which is placed coaxially with respect to the main shaft (2), for taking up different tools or tool supports, and the main shaft (2) or the further shaft (3) may be powered as may be desired using a common motor (12) having an output driving element (13), characterized in that the main shaft (2) and the further shaft (3) each have their own shaft input driving element (10 or 11) and in that between the motor output driving element (13) and the shaft input driving elements (10 and 11) there is a group of wheels (18), which has a number (answering to the number of stages (14, 15) of the motor output driving elements (13) of input wheels (19, 20; 54, 55), which together with the stage used therewith of the motor output driving element (13) are placed in a single plane and are powered continuously thereby, and the wheel group has output wheels (23, 24; 52, 53) designed for separate use with the shaft input driving elements (10 and 11) and lined up axially therewith, and of these output wheels the shaft input element which is lined up in each case may be powered, and furthermore the output wheels (23, 24; 52, 53) may be put out of operation and into operation by a shifter (27; 50), in the path of the flow of power between the motor output driving element (13) and the shaft input driving elements (10 and 11) makes its way, and which may be placed in a number of different working positions, in which, in each case, one shaft input element (10, 11) is turningly-drivingly joined up with the motor output driving element (13) and the other shaft input driving element in the case in question is stopped.

2. A combined machine tool for hobby purposes as claimed in claim 1, characterized in that the shaft input driving elements (10, 11) and their output wheels (52, 53) have running faces placed side by side and having the same diameter for a flat belt (50) forming the shifter, and the belt (50) may be shifted by way of a shifting unit (51) over the common breadth of the shaft input driving elements (10 and 11), which is equal to the commin breadth of the output wheels (52, 53) used therewith, and, if one of the shafts is able to be run at more than one speed, the running face of the input driving element (11) of the shaft (3) able to be run at more than one speed, has a breadth equal to one belt breadth for each speed and this input driving element (11) has, for each belt breadth, one output wheel (52 or 53) and, if the two shafts make necessary at least one common driving speed, the two shaft input driving elements (10 and 11) have at least one output wheel (53) which is placed in the middle with respect to their separating space (56), the output wheel (53) having a breadth of at least one belt breadth for each shaft input driving element used therewith.

3. A combined machine tool for hobby purposes as claimed in claim 1 or claim 2, characterized in that the group of wheels (18) has two wheel units, which are turningly supported so that they may be turned in relation to each other, with, in each case, one input wheel (54 or 55) and ohne output wheel (52 or 53) fixed thereto.

4. A combined machine tool for hobby purposes as claimed in claim 1, characterized in that the wheel group (18) has output wheels (23, 24) which are kept in connection, with, in each case, one shaft input driving element (10 or 11) in the same plane all the time, and the output wheels (23, 24) are placed freely turning next to the input wheels (19 and 20), which are kept in connection with the motor output driving element (13) all the time, and in that the input and output wheels (19, 20, 23, 24) have clutch elements (34) which may be joined up with clutch elements (36, 38) for use therewith of the shifter (27), which is preferably designend running through the wheel group (18) and which is supported for free turning motion in relation to the wheel group (18) and in each working position has the function of joining up one input wheel (19 and 20) and one output wheel (23 or 24) drivingly for turning motion.

5. A combined machine tool for hobby purposes as claimed in claim 4, characterized in that the clutch elements (34 and 37, 38) take the form of teeth which may be joined up with each other by axial motion of the parts, and the input and output wheels of the wheel group (18) preferably each have one inner gear tooth wing (34), and these gear rings on the side of the shifter have at least two circumferential tooth rings (36, 38) which are separated by a free-wheeling groove (39) whose breadth is at least equal to the simple tooth meshing breadth, and, if the two shafts make necessary at least one common output driving speed, the teeth coming into mesh with the input wheel (19) for use with this speed, of the input wheels (19) or of the shifter (27) on the one hand have single meshing breadths and on the other hand at least twice this meshing breadth and, if at least one shaft is to be turned at a number of different speeds, the teeth coming into mesh in the case of the output wheel (24) used with the powered shaft (3) able to be turned at a number of different speeds, of the output wheel (24) and of the shifter (27) have on the one hand the single meshing breadth and on the other hand at least twice this meshing breadth.

6. A combined machine tool for hobby purposes as claimed in at least one of claims 4 and 5, characterized in that the wheel group (18) has a shaft (30), stretching from one side of the machine to the other, running through it, the ends of shaft (30) being bearinged and on it, there is a bush, forming the shifter (27), the shaft (30) having an axial degree of freedom, and at least one outer wheel (19) of the wheel group (18) is bearinged on the shaft (30) itself running through the wheel group (18) and the other wheels (20, 23, 24) of the wheel group (18) are bearinged on flanges (31, 32) of bush-like form placed round the shaft (30) and the shifter (27).

7. A combined machine tool for hobby purposes as claimed in claim 6, characterized in that the wheel (19) placed on the shaft (30) has a side, bush-like flange (31) having a ring of inner gear teeth (34) and on the flange (31) the next wheel (20) is bearinged, and in that the further two wheels (23, 24) are bearinged on a common, fixed bush (32), and the wheels (20 and 23, 24) bearinged on bushes (31, 32) each have covers (35), each such cover having a ring of inner gear teeth (34), the covers overlapping the bush (31 or 32) in question and being placed at the ends.

8. A combined machine tool for hobby purposes as claimed in at least one of claims 4 to 7, characterized in that the bush, forming the shifter (27) is joined up on the sides opposite to the wheel (19) bearinged on the shaft (30) stretching through the wheel group itself, with an adjustable operation lever (28) which may be moved axially.

9. A combined machine tool for hobby purposes as claimed in anyone of claims 1 to 8, characterized in that the motor (12) is rigidly fixed to an inner floor plate (16), which has a tailpiece running out past the motor output driving element (13) axially and on the tail piece the bearing supports (29 and 33) for the shaft (30) running through the group of wheels (18) and the bush (32) supporting the output wheels (23, 24) are fixed.

10. A combined machine tool for hobby purposes as claimed in at least one of claims 1 to 9, characterized in that the further shaft (3) is supported on the two sides of the input driving element (11) on bearing supports (6) which are joined up by spacer bolts (8) with the machine frame (1).

**Revendications**

1. Machine combinée pour travaux à domicile comportant préférentiellement un appareil de base conçu comme raboteuse, où peuvent être incorporés alternativement des appareils complémentaires, l'appareil de base étant muni d'un arbre principal (2) et les appareils complémentaires d'un arbre auxiliaire (3) disposé coaxialement à l'arbre principal (2) pour rececoir des outils ou porte-outils interchangeables, l'arbre principal (2) et l'arbre auxiliaire (3) pouvant être entraînés alternativement par un moteur commun (12) equipé d'un élément de transmission (13), caractérisée par le fait que l'arbre principal (2) et l'arbre auxiliaire (3) sont chacun munis de leur propre élément de transmission d'arbre (10 ou 11) et qu'entre l'élément de transmission du moteur (13) et les éléments de transmission d'arbre (10 ou 11) est monté un train de roues (18) comportant un nombre de roues d'entrée (19, 20; 54, 55) correspondant au nombre de gradins (14, 15) de l'élément de transmission (13) du moteur, se trouvant dans le même plan que le gradin correspondant de l'élément de transmission (13) du moteur et en prise permanente avec ce gradin, ainsi que de roues de sortie (23, 24; 52, 53) correspondant chacune aux éléments de transmission d'arbre (10, 11) axialement alignées sur celles-ci, dont chaque élément de transmission correspondant peut être actionné en temps voulu et qui peuvent être enclenchés ou découplés à l'aide d'un membre baladeur (27, 50), conduisant le flux de force entre l'élément de transmission moteur (13) et les éléments de transmission d'arbre (10 ou 11) et pouvant occuper plusieurs positions de marche par lessuelles chacun des éléments de transmission d'arbre (10 ou 11) est relié pour rotation forcée à l'élément de transmission (13) du moteur, tandis que l'autre élément de transmission d'arbre est immobilisé.

2. Machine combinée pour travaux à domicile suivant la revendication 1, caractérisée par le fait que les élément de transmission d'arbre (10, 11) et les roues de sortie correspondantes (52, 53) présentent chacun des surfaces portantes immédiatement voisines et de diamètre égale pour une courroie plate (50) servant d'élément baladeur, pouvant être déplacée par un guide-courroie (51) sur la largeur commune des éléments de transmission d'arbre (10 ou 11), égale à la largeur commune des roues de sortie (52, 53) correspondantes, alors que si l'un des arbres est actionnable à plusieurs vitesses, la surface portante de l'élément de transmission (11) de l'arbre entraînable à plusieurs vitesses possède une largeur comprenant une largeur dé courroie par vitesse et qu'à cet élément de transmission (11) correspond, par largeur de courroie, une roue de sortie (52 ou 53) et que si les deux arbres requièrent au moins une vitesse commune d'entraînement, les deux éléments de transmission d'arbre (10 ou 11) disposent au moins d'une roue de sortie commune (53) disposée au milieu par rapport à leur interstice (56), cette roue de sortie ayant une largeur couvrant au moins une largeur de courroie par élément d'arbre correspondant.

3. Machine combinée pour travaux à domicile suivant au moins l'une des revendications 1 et 2 ci-avant, caractérisée par le fait que le train de roues (18) comporte deux unités de roues pouvant tourner librement l'une vis-à-vis de l'autre, comprenant chacune une roue d'entrée (54 ou 55) et une roue de sortie (52 ou 53) solidaire à celle-ci.

4. Machine combinée pour travaux à domicile suivant la revendication 1, caractérisée en ce que le train de roues (18) comporte des roues de sortie (23, 24) en prise permanente avec un élément de transmission d'arbre (10 ou 11) correspondant et disposé dans le même plan que celles-ci, qui sont montées en rotation libre à côté des roues d'entrée (19 ou 20) en prise permanente avec l'élément de transmission (13) du moteur et que les roues d'entrée et de sortie (19, 20, 23, 24) sont munies d'éléments coupleurs (34) pouvant s'engrener avec les éléments coupleurs correspondants (36, 38) du membre baladeur (27) passant préférentiellement à travers le train de roues (18) en sens coaxial, cet élément baladeur étant monté pour tourner librement vis-à-vis du train de roues (18) et pouvant assurer dans chaque position de réglage la rotation solidaire d'une roue d'entrée (19 ou 20) avec une roue de sortie (23 ou 24).

5. Machine combinée pour travaux à domicile suivant la revendication 4, caractérisée en ce que les éléments coupleurs (34 ou 37, 38) sont conçus comme des dentures pouvant s'engrener par déplacement axial, et alors que les roues d'entrée et de sortie du train de roues (18) sont chacune préférentiellement munies d'une denture intérieure (34) auxquelles correspondent du côté du membre baladeur au moins deux dentures extérieures (36, 38) séparées par une encoche (39) pour rotation libre dont la largeur est au moins égale à la largeur d'engrènement des dentures, alors que si les deux arbres requièrent au moins une vitesse commune, la denture de la roue d'entrée (19) correspondant à cette vitesse ou du membre baladeur (27) entrant en engrènement, présente d'un côté une largeur d'attaque simple et de l'autre une largeur d'attaque au moins double et si au moins un arbre est actionnable à plusieurs vitesses, la denture de la roue de sortie (24) venant s'engrener au niveau correspondant à l'arbre (3) entraînable à plusieurs vitesses et du membre baladeur (27) présentent d'un côté une largeur d'engrènement simple et de l'autre une largeur d'engrènement au moins double.

6. Machine combinée pour travaux à domicile suivant au moins l'une des revendications précédentes 4 et 5, caractérisée en ce que le train de roues (18) est traversé de part en part par un axe (30), monté sur paliers aux deux extrémités, sur lequel coulisse axialement une douille solidaire à l'axe en sens rotatif qui forme le membre baladeur (27), alors que préférentiellement une roue extérieure (19) du train de roues (18) est montée directement sur l'axe (30) traversant de part en part et que les autres roues (20, 23, 24) du train de roues (18) sont montées sur les brides en forme de buselures (31, 32) entourant l'axe (30) et le membre baladeur (27).

7. Machine combinée pour travaux à domicile suivant la revendication 6, caractérisée en ce que la roue (19) montée sur l'axe (30) présente une bride latérale en forme de buselures (31) pourvue d'une denture intérieure (34) sur laquelle est montée la roue voisine (20) et que l'autre paire de roues (23, 24) est montée sur une buselure fixe (32), alors que les roues (20 ou 23, 24) montées sur les buselures (31, 32) sont chacune munies de couvercles (35) frontaux présentant chacune une denture intérieure (34) et enjambant sur la buselure correspondante (31 ou 32).

8. Machine combinée pour travaux à domicile suivant au moins l'une des revendications 4 à 7 ci-avant, caractérisée en ce que du côté opposé à la roue (19) directement montée sur l'axe (30) traversant l'ensemble de part en part, la douille formant le membre baladeur (27) est reliée à un levier de manoeuvre (28) déplaçable en sens axial.

9. Machine combinée pour travaux à domicile suivant au moins l'une des revendications précédentes, caractérisée en ce que le moteur (12) est monté fixement sur un support intermédiaire (16) qui présente un prolongement dépassant axialement l'élément de transmission (13) du moteur, sur lequel sont attachés les porte-paliers (29 ou 33) de l'axe (30) traversant le train de roues (18), ou de la buselure (32) portant les roues de sortie (23, 24).

10. Machine combinée pour travaux à domicile suivant au moins l'une des revendications précédentes, caractérisée en ce que l'arbre auxiliaire (3) est appuyé de part et d'autre de l'élément de transmission (11) sur des porte-paliers (6) rattachés au bâti (1) par les boulons-entretoises (8).

Fig. 1

Fig.2

Fig.3